## Europäisches Patentamt
## European Patent Office
## Office européen des brevets

(11) Veröffentlichungsnummer: **0 192 796**
**B1**

(12)
# EUROPÄISCHE PATENTSCHRIFT

(45) Veröffentlichungstag der Patentschrift:
08.03.89

(51) Int. Cl.⁴: **F 01 L 1/34**, F 01 L 13/00

(21) Anmeldenummer: **85102215.2**

(22) Anmeldetag: **28.02.85**

(54) Verfahren zum Steuern der Leistung eines eine ventilgesteuerte Brennkraftmaschine versorgenden Abgasturboladers.

(43) Veröffentlichungstag der Anmeldung:
03.09.86 Patentblatt 86/36

(45) Bekanntmachung des Hinweises auf die Patenterteilung:
08.03.89 Patentblatt 89/10

(84) Benannte Vertragsstaaten:
AT BE CH DE FR GB IT LI LU NL SE

(56) Entgegenhaltungen:
DE-B-1 034 925
FR-A-1 179 848
GB-A-1 421 154
US-A-3 683 875
US-A-3 888 217

(73) Patentinhaber: **AUDI AG, Postfach 220, D-8070 Ingolstadt (DE)**

(72) Erfinder: **Piech, Ferdinand, Dr., Gerolfinger Strasse 128, D-8070 Ingolstadt (DE)**

(74) Vertreter: **Le Vrang, Klaus, AUDI AG Postfach 220 Patentabteilung I/EQP, D-8070 Ingolstadt (DE)**

EP 0 192 796 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die Erfindung betrifft ein Verfahren zum Steuern der Leistung eines eine ventilgesteuerte Brennkraftmaschine mit vorverdichteter Verbrennungsluft versorgenden Abgasturboladers gemäß dem Oberbegriff des Patentanspruches.

Ein derartiges Verfahren offenbart die FR-A-1 179 848, wobei die Verstellung der Auslaßventile drehzahlabhängig und die Regelung des Ladedruckes durch eine by-pass-Steuerung vorgenommen wird. Bei zu hohem Ladedruck wird das by-pass-Ventil geöffnet und das überschüssige Abgas in der Abgasturbine vorbeigeleitet.

Dieses Verfahren ergibt aber nicht in allen Lastzuständen verzögerungsfrei einen ausreichenden Ladedruck, z. B., wenn aus dem Schubbetrieb mit hoher Motordrehzahl sofort wieder beschleunigt werden soll. In diesem Falle werden nämlich die Auslaßventile nicht vorverstellt, obwohl aufgrund des geringen Abgasdurchsatzes der Ladedruck zwangsläufig niedrig ist.

Aufgabe der Erfindung ist es, ein gattungsgemäßes Verfahren aufzuzeigen, mit dem die Leistung des Abgasturboladers bzw. der Ladedruck bei Teillast sowie in allen Drehzahlbereichen und Vollast verbessert werden kann.

Diese Aufgabe wird erfindungsgmäß mit den kennzeichnenden Merkmalen des Patentanspruches gelöst. Erfindungsgemäß wird somit in direkter Regelung unmittelbar abhängig vom Ladedruck der Öffnungsbeginn der Auslaßventile gesteuert, in dem auch ein unterer Wert des Ladedruckes als Regelschwelle herangezogen wird.

Die ausschließlich vom Ladedruck abhängige Regelung des Öffnungsbeginnes der Auslaßventile ist wirkungswoller als die beim Stand der Technik übliche Regelungen, bei denen unabhängig voneinander einmal die Motordrehzahl und zur Abregelung höherer Ladedrücke der Ladedruck selbst herangezogen werden. Ferner erfordert die erfindungsgemäße Vorrichtung einen geringeren Bauaufwand.

Ein Ausführungsbeispiel der Erfindung ist im folgenden mit weiteren Einzelheiten näher erläutert. Die schematische Zeichnung zeigt in

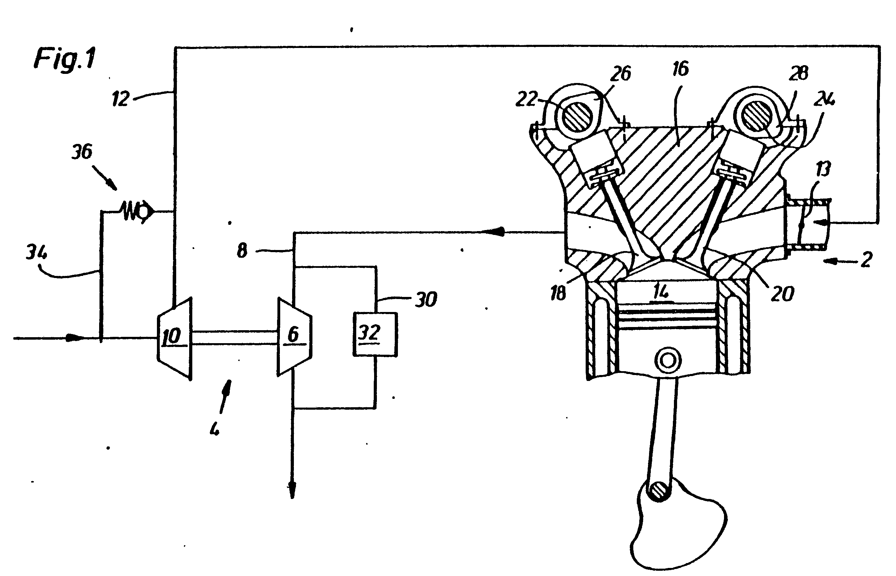

Fig. 1 eine nach dem erfindungemäßen Verfahren betriebene Viertakt-Brennkraftmaschine mit Abgasturbolader und Doppelnockenwellen im Querschnitt und

Fig. 2 eine Ansicht auf die mittels eines Zahnriemens angetriebenen Doppelnockenwellen mit erfindungsgemäßer Verstellvorrichtung.

Eine Hubkolben-Brennkraftmaschine (2) ist mit einem Abgasturbolader (4) versehen, dessen Abgasturbine (6) über eine Abgasleitung 8 mit dem Abgas der Brennkraftmaschine 2 versorgt wird.

Die Abgasturbine 6 treibt einen Verdichter 10, der die Brennkraftmaschine über eine Leitung 12 mit verdichteter Verbrennungsluft versorgt. In der Leitung 12 ist eine Drosselklappe 13 zur Leistungssteuerung der Brennkraftmaschine vorgesehen. Die Brennstoffzumeßeinrichtung ist nicht dargestellt.

Der Ladungswechsel der Brennkraftmaschine 12 wird je Zylinder 14 durch ein in einem Zylinderkopf 16 gelagertes Einlaßventil 18 und ein Auslaßventil 20 bewirkt. Die Ventile 18, 20 werden durch auf zwei Nockenwellen 22, 24 befindliche Einlaßnocken 26 und Auslaßnocken 28 betätigt.

Von der Abgasleitung 8 zweigt stromauf der Abgasturbine 6 eine Bypass-Leitung 30 ab, in welche ein Bypassventil 32 eingeschaltet ist. Das Bypassventil 32 beginnt bei Erreichen eines maximalen Ladedruckes in der Leitung 12 zu öffnen, so daß eine Teilmenge der aus der Brennkraftmaschine 2 austretenden Abgase vor der Abgasturbine 6 abgezweigt werden. Eine in der Leitung 12 vorgesehene Kurzschlußleitung 34 mit einem federbelasteten Rückschlagventil 36 soll in bestimmten Betriebszuständen ein Pumpen des Verdichters verhindern.

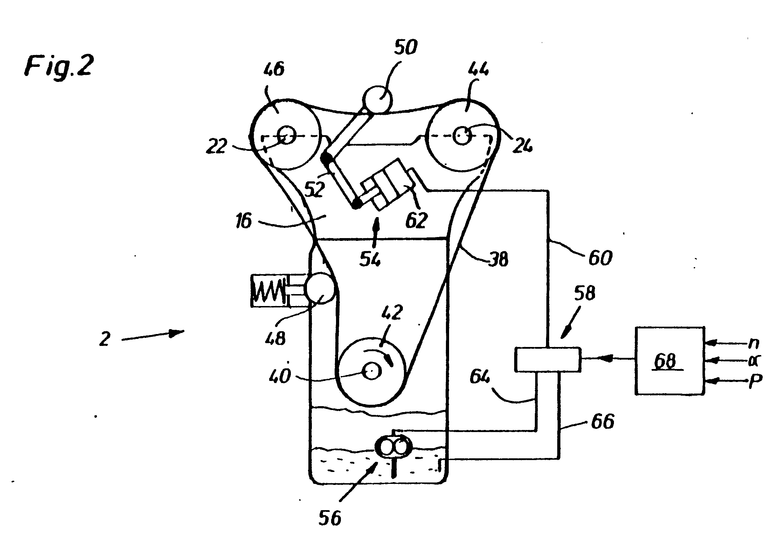

Die beiden Nockenwellen 22, 24 (vgl. Fig. 2) werden mittels eines Zahnriemens 38 von der Kurbelwelle 40 der Brennkraftmaschine 2 angetrieben. Dazu sind an den Enden der entsprechenden Wellen Zahnräder 42, 44, 46 befestigt, in die der Zahnriemen eingreift. Der Zahnriemen 38 wird mittels einer federbelasteten Spannrolle 48 unter einer definierten Spannung gehalten.

Zwischen den beiden Nockenwellen 22, 24 greift an den Zahnriemen 38 eine Verstellrolle 50 an, mit deren Hilfe über einen an dem Zylinderkopf 16 drehbar gelagerten Winkelhebel 52 die Länge des zwischen den beiden Nockenwellen befindlichen Zahnriemen-Trums veränderbar ist.

An dem Winkelhebel 52 greift anderenends eine Kolben-Zylinder-Einheit 54 an, die die Verstellung des Winkelhebels 52 bewirkt. Die Kolben-Zylinder-Einheit 54 bzw. deren Arbeitsraum 62 wird von der Schmierölpumpe 56 der Brennkraftmaschine 2 über ein Taktventil 58 und eine Leitung 60 mit Drucköl beaufschlagt. Das Taktventil 58 steuert abhängig von seiner Taktfrequenz den Öldruck in den Arbeitsraum 62, in dem es einen Überströmquerschnitt (nicht dargestellt) zwischen der Leitung 64 von der Schmierölpumpe und einer Leitung 66 zum drucklosen Ölsumpf mehr oder weniger aufsteuert.

Die Steuerung des Taktventiles 58 erfolgt über eine Steuerelektronik 68 mit einem Taktgenerator und einem Mikroprozessor, in dem die nach einem Kennfeld abgespeicherten Daten verarbeitet werden. Der Steuerelektronik 68 werden ständig die von nicht dargestellten Sensoren ermittelten Daten Drehzahl (n) der

Brennkraftmaschine, Last α der Brennkraftmaschine, Druck P in der Verbrennungsluft-Leitung 12 stromab des Verdichters 10 jedoch stromauf der Drosselklappe 13 zugeführt.

Diese Daten werden in der Steuerelektronik 68 nach Maßgabe des abgespeicherten Kennfeldes verarbeitet und die entsprechende Vorverlegung des Öffnungsbeginns der Auslaßventile 20 durch Verschwenken des Winkelhebels 52 im Uhrzeigersinn gesteuert. Dabei wird durch entsprechende Frequenzsteuerung des Taktventiles 58 der Schmieröldruck im Arbeitsraum 62 der Kolben-Zylinder-Einheit 54 erhöht und somit der Winkelhebel 52 unter Überwindung der Vorspannung der federbelasteten Spannrolle 48 entsprechend verstellt. Durch die damit bewirkte Verlängerung des zwischen den beiden Nockenwellen 22, 24 befindlichen Zahnriemen-Trums wird die die Auslaßnocken 26 tragende Nockenwelle 22 zur Drehrichtung vorverstellt, wodurch entsprechend der Öffnungsbeginn der Auslaßventile 18 vorverstellt ist. Eine entgegengerichtete Zurückstellung der Nockenwelle 22 erfolgt, in dem durch Verändern der Taktfrequenz des Taktventiles 58 der Öldruck im Arbeitsraum 62 vermindert wird. Die Rückstellkraft wird dabei von der federbelasteten Spannrolle 48, weiche in jeder Verstellphase eine gleichmäßige Spannung des Zahnriemens 38 aufrecherhält, erzeugt.

Wird beispielsweise die Drosselklappe 13 geschlossen, so würde aufgrund der geringen Abgasenergie der Ladedruck (P) in der Verbrennungsluftleitung 12 absinken. Durch die erfolgende Vorverstellung des Öffnungsbeginns der Auslaßventile 18 wird jedoch ein energiereicheres, weil in den Zylindern 14 der Brennkraftmaschine 2 noch nicht voll entspanntes Abgas über die Leitung 8 der Abgasturbine 6 zugeführt und dadurch die Drehzahl des Abgasturboladers 4 bzw. der Ladedruck in der Leitung 12 erhöht. Bei einer nachfolgenden, abrupten Erhöhung der Last (volle Öffnung der Drosselklappe 13) liegt dann bereits ein Ladedruck vor, der ein hohes Drehmoment der Brennkraftmaschine und eine entsprechende Beschleunigung sicherstellt. Mit zunehmender Drehzahl der Brennkraftmaschine wird dann sukzessive die Vorverstellung der Auslaßventile 18 zurückgenommen.

Es versteht sich, daß zahlreiche Ausgestaltungen der Vorrichtung zum Durchführen des erfindungsgemäßen Verfahrens möglich sind. Beispielsweise kann ein Schalter vorgesehen sein, mit Hilfe dessen die Frühverstellung der Auslaßöffnung bei zunehmendem Schließen der Drosselklappe unterdrückbar ist und nur die Vollastfrühverstellung bei absinkender Drehzahl erhalten bleibt. Die erstgenannte Art der Frühverstellung verbessert zwar das Ansprechverhalten der Brennkraftmaschine; es ist jedoch im allgemeinen mit einer Verbrauchserhöhung im Teillastbereich zu rechnen.

## Patentanspruch

Verfahren zum Steuern der Leistung eines eine ventilgesteuerte Brennkraftmaschine mit vorverdichteter Verbrennungsluft versorgenden Abgasturboladers, dessen Turbine vom Abgas der Brennkraftmaschine angetrieben wird, wobei zur Erhöhung der Leistung des Abgasturboladers bei niedriger Last und/oder Drehzahl der Brennkraftmaschine der Öffnungsbeginn der Auslaßventile nach früh verstellt wird, dadurch gekennzeichnet, daß der Öffnungsbeginn derart nach früh verstellt wird, daß ein vorbestimmter Druck P in der Verbrennungsluft-Leitung (12) stromab des Verdichters (10) nicht unterschritten wird und daß mit zunehmendem Druck der Öffnungsbeginn wieder zurückgestellt wird.

## Claims

Method for controlling the performance of an exhaust gas turbocharger which supplies precompressed combustion air to a valve-controlled internal-combustion engine and the turbine of which is driven by the exhaust gas from the internal combustion engine, the start of opening of the outlet valves being advanced to raise the performance of the exhaust gas turbocharger at low load and/or rotational speed of the internal combustion engine, characterized in that the start of opening is advanced in such a way that the pressure in the combustion air line (12) downstream of the compressor does not fall below a predetermined pressure P and that with increasing pressure the start of opening is then retarded again.

## Revendication

Procedé de commande de la puissance d'un turbocompresseur a gaz d'échappement qui alimente en air comburant précomprimé un moteur à combustion interne à commande par soupapes, et dont la turbine est entraînée par les gaz d'échappement du moteur à combustion interne, le début de l'ouverture des soupapes d'échappement étant réglé en avance pour augmenter la puissance du turbocompresseur à gaz d'échappement en cas de faible charge et/ou de faible vitesse de rotation du moteur à combustion interne, caractérisé en ce que le début de l'ouverture est réglé en avance de telle manière qu'une pression prédéterminée (P) dans la conduite d'air comburant (12) en aval du compresseur (10) ne soit pas dépassée vers le bas, et en ce que le début de l'ouverture est rétabli au réglage initial avec l'augmentation de la pression.

*Fig.1*

EP 0 192 796 B1

Fig.2

EP 0 192 796 B1